# EUROPÄISCHE PATENTSCHRIFT

(11) **EP 3 771 320 B1**
(45) Veröffentlichungstag und Bekanntmachung des Hinweises auf die Patenterteilung: **30.11.2022**
(21) Anmeldenummer: 20401041.7
(22) Anmeldetag: 16.07.2020
(51) Int. Cl.: A01C 17/00, A01C 15/00, A01B 63/10, G01G 23/00

(54) **VERFAHREN ZUM EINSTELLEN DER NEIGUNG AN EINEM LANDWIRTSCHAFTLICHEN STREUGERÄT**
METHOD FOR ADJUSTING THE INCLINATION OF AN AGRICULTURAL SPREADER
PROCÉDÉ DE RÉGLAGE DE L'INCLINAISON SUR UN APPAREIL D'ÉPANDAGE AGRICOLE

(30) Priorität: 30.07.2019 DE 102019120473
(43) Veröffentlichungstag der Anmeldung: 03.02.2021
(73) Patentinhaber: Amazonen-Werke H. Dreyer SE & Co. KG, 49205 Hasbergen (DE)
(72) Erfinder: Kleine-Hartlage, Hubertus, 49186 Bad Iburg (DE); Kötter, Heiner, 49086 Osnabrück (DE); Meyer zu Hoberge, Jörg, 49492 Westerkappeln (DE); Ströbel-Fröschle, Markus, 49124 Georgsmarienhütte (DE)

(56) Entgegenhaltungen:
- EP-A1- 3 501 247
- EP-A2- 2 524 584
- EP-A2- 3 300 570
- DE-A1-102016 225 773
- GB-A- 2 324 377

## Beschreibung

Die Erfindung betrifft ein Verfahren zum Einstellen der Neigung an einem landwirtschaftlichen Streugerät nach Patentanspruch 1, ein landwirtschaftliches Streugerät nach Patentanspruch 11 und einen landwirtschaftlichen Maschinenverbund nach Patentanspruch 13.

Landwirtschaftliche Streugeräte, wie beispielsweise Düngerstreuer, weisen üblicherweise einen Vorratsbehälter für das auszubringende Streugut auf. Moderne Streugeräte verfügen darüber hinaus über eine Füllstandserfassungseinrichtung, mittels welcher der Füllstand des Vorratsbehälters erfasst werden kann. Auf diese Weise kann eine präzise Beladung des Vorratsbehälters mit Streugut umgesetzt werden. Darüber hinaus kann der Benutzer des landwirtschaftlichen Streugeräts während der Streugutausbringung über den aktuellen Füllstand des Vorratsbehälters informiert werden. Außerdem kann der Benutzer auf eine Unterschreitung einer kritischen Füllstandsgrenze während der Streugutausbringung hingewiesen werden.

Durch unterschiedliche Fahrwerke und Bereifungen an Trägerfahrzeugen von landwirtschaftlichen Streugeräten ergeben sich bei unterschiedlichen Füllständen eines Anbau-Streugeräts aufgrund der Federwege am Fahrwerk des Trägerfahrzeugs und der Reifendeformationen unterschiedliche Neigungen an dem Streugerät. Die Neigung des Streugeräts beeinflusst die Streugutausbringung aufgrund einer geänderten Neigung der Streuscheiben und anderer Neigungseinflüsse in erheblichem Maße. Die Neigung entsprechender Streugeräte kann auch durch sich ändernde Einsinktiefen in den Boden an der Vorder- und/oder Hinterachse des Trägerfahrzeugs beeinflusst werden.

Bei Anhänge-Streugeräten können die Deichselkonstruktionen des gezogenen Streugeräts und/oder die Position und/oder Konstruktion der Kupplungsvorrichtung des Zugfahrzeugs einen Einfluss auf die Neigungsveränderung des Streugeräts bei einer Füllstandsänderung haben.

Bei der Ausbringung von Streugut auf eine flache und plane landwirtschaftliche Nutzfläche ist grundsätzlich eine parallele Ausrichtung des Streuwerks in Bezug auf den Boden der landwirtschaftlichen Nutzfläche gewünscht. Somit sind entsprechende Neigungen des Streugeräts während der Streugutausbringung aufgrund eines sich ändernden Füllstandes des Vorratsbehälters während der Streugutausbringung auszugleichen, um das gewünschte Streuergebnis zu erzielen.

Die Druckschrift DE 10 2016 225 773 A1 schlägt eine Neigungsfeststellung für das Streugerät in Abhängigkeit einer sensorisch erfassten aktuellen Neigung des Trägerfahrzeugs oder des Streugeräts vor, wobei die Neigungserfassung über zwei Abstandssensoren einer Lageerfassungseinrichtung erfolgt. Zur Neigungserfassung sind somit zumindest zwei Abstandssensoren erforderlich, welche während der Streugutausbringung kontinuierlich und fehlerfrei arbeiten müssen, um dauerhaft eine präzise Neigungserfassung gewährleisten zu können.

Diese und andere Lösungen zur Ermittlung der Neigung eines landwirtschaftlichen Streugeräts während der Streugutausbringung erfordern aufwendige Sensorik und/oder sind vergleichsweise fehleranfällig, da die Unebenheit und Krümelung des Bodens einer landwirtschaftlichen Nutzfläche lediglich eine unpräzise Bodenabstandserfassung erlaubt.

Weitere Streugeräte sind aus den Druckschriften EP 3 501 247 A1 und EP 3 300 570 A2 bekannt.

Die der Erfindung zugrundeliegende Aufgabe besteht somit darin, Streufehler aufgrund falscher Geräteneigung zu vermeiden und somit das Streubild zu verbessern, ohne dass hierfür eine kontinuierliche Neigungserfassung über Abstandssensoren durchzuführen ist.

Die Aufgabe wird gelöst durch ein Verfahren der eingangs genannten Art, wobei im Rahmen des erfindungsgemäßen Verfahrens die Neigung eines zumindest eine Streuscheibe, zumindest ein Dosierorgan für das Streugut, wobei jeder Streuscheibe ein Dosierorgan zugeordnet ist, und zumindest eine Einrichtung zur Verstellung des Aufgabepunkts des Streuguts auf die Streuscheibe umfassenden Streuwerks des landwirtschaftlichen Streugeräts in Abhängigkeit des durch die Füllstandserfassungseinrichtung erfassten Füllstands des Vorratsbehälters angepasst wird, wobei das Anpassen der Neigung des Streuwerks des landwirtschaftlichen Streugeräts gemäß einer Kennlinie erfolgt, welche einen Zusammenhang zwischen dem Füllstand des Vorratsbehälters und einer auszugleichenden Neigung des Streuwerks des landwirtschaftlichen Streugeräts definiert.

Die Neigungsverstellung des Streuwerks in Abhängigkeit des Beladungs- bzw. Füllzustands des Vorratsbehälters hat den Vorteil, dass keine direkte sensorische Neigungserfassung während des Streuvorgangs zu erfolgen hat.

Somit kann eine Neigungsanpassung auch erfolgen, wenn die tatsächliche Neigung nicht oder nur unpräzise ermittelt werden kann. Die erfindungsgemäße Neigungseinstellung benötigt somit keine Abstandssensoren, über welche die Geräteneigung erfasst werden kann. Die Krümelung und die Unebenheiten des Bodens der landwirtschaftlichen Nutzfläche führen somit nicht zu einer Verfälschung der erfassten Geräteneigung, sodass eine wesentlich präzisere Neigungsanpassung des Streuwerks des landwirtschaftlichen Streugeräts erfolgen kann.

Das landwirtschaftliche Streugerät ist vorzugsweise als Zweischeiben-Zentrifugal-Düngerstreuer ausgebildet. Das Streuwerk des landwirtschaftlichen Streugeräts umfasst zumindest eine, vorzugsweise zwe nebeneinander angeordnete und rotierend antreibbare Streuscheiben. Ferner umfasst das Streuwerk zumindest ein, vorzugsweise zwei nebeneinander angeordnete Dosierorgane für das Streugut, wobei jeder Streuscheibe ein Dosierorgan zugeordnet ist. Das Streuwerk umfasst ferner zumindest eine, vorzugsweise zwei nebeneinander angeordnete Einrichtungen zur Verstellung des Aufgabepunkts des Streuguts auf die Streuscheiben. Vorzugsweise ist jeder Streuscheibe eine Einrichtung zur Verstellung des Aufgabepunkts zugeordnet.

In einer bevorzugten Ausführungsform des erfindungsgemäßen Verfahrens wird das landwirtschaftliche Streugerät beim Anpassen der Neigung des Streuwerks um eine horizontale Querachse verschwenkt. Die Querachse verläuft quer, insbesondere rechtwinklig, zur Fahrtrichtung des landwirtschaftlichen Streugeräts. Alternativ oder zusätzlich kann das landwirtschaftliche Streugerät beim Anpassen der Neigung des Streuwerks auch um eine horizontale Längsachse verschwenkt werden. Die Längsachse verläuft parallel oder fluchtend zur Fahrtrichtung des landwirtschaftlichen Streugeräts.

In einer weiteren bevorzugten Ausführungsform des erfindungsgemäßen Verfahrens ist das landwirtschaftliche Streugerät als Anbau-Streugerät ausgebildet und die Neigung des Streuwerks wird über die Verstellung der Anbau-Neigung des Streugeräts verändert. Die Anbau-Neigung des Streugeräts kann über eine Verstellung an dem landwirtschaftlichen Streugerät und/oder über eine Verstellung an dem Trägerfahrzeug erfolgen.

Das erfindungsgemäße Verfahren wird ferner dadurch vorteilhaft weitergebildet, dass die Verstellung der Anbau-Neigung des Streugeräts durch eine Verstellung einer trägerfahrzeugseitigen Anbauvorrichtung erfolgt. Die trägerfahrzeugseitige Anbauvorrichtung ist vorzugsweise ein Dreipunkt-Kraftheber. Vorzugsweise umfasst das Streugerät eine Steuerungseinrichtung, welche das eingerichtet ist, einen Steuerungsbefehl zur Neigungsverstellung des landwirtschaftlichen Streugeräts in Abhängigkeit des durch die Füllstandserfassungseinrichtung erfassten Füllstands des Vorratsbehälters zu erzeugen und diesen Steuerungsbefehl dem Trägerfahrzeug zur Verstellung der trägerfahrzeugseitigen Anbauvorrichtung bereitzustellen. Die Bereitstellung des Steuerungsbefehls kann mittels eines Traktor-Implement-Managements (TIM) über Bus-Nachrichten erfolgen.

In einer anderen bevorzugten Ausführungsform des erfindungsgemäßen Verfahrens umfasst die trägerfahrzeugseitige Anbauvorrichtung einen Oberlenker und/oder einen oder mehrere Unterlenker. Die Verstellung der trägerfahrzeugseitigen Anbauvorrichtung erfolgt vorzugsweise über eine Längen-, Neigungs- und/oder Positionsveränderung des Oberlenkers und/oder des einen oder der mehreren Unterlenker. Der Oberlenker und/oder der eine oder die mehreren Unterlenker können hydraulisch oder pneumatisch längenveränderbar und/oder positionsveränderbar sein. Eine Steuerungseinrichtung des Streugeräts kann eine hydraulische oder pneumatische Längenveränderung und/oder Positionsveränderung des Oberlenkers und/oder des einen oder der mehreren Unterlenker zur Verstellung der trägerfahrzeugseitigen Anbauvorrichtung veranlassen. Hierzu kann eine Hydraulik- oder Pneumatikleitung des Streugeräts direkt mit dem Oberlenker oder dem einen oder den mehreren Unterlenkern verbunden sein. Der Oberlenker und/oder der eine oder die mehreren Unterlenker können über Hydraulikventile oder Pneumatikventile des Streugeräts gesteuert werden. Die trägerfahrzeugseitige Anbauvorrichtung kann auch ein Hubwerk umfassen, wobei die Verstellung der trägerfahrzeugseitigen Anbauvorrichtung über eine Zustandsveränderung des Hubwerks erfolgen kann.

In einer weiteren bevorzugten Ausführungsform des erfindungsgemäßen Verfahrens ist das landwirtschaftliche Streugerät als Anhänge-Streugerät ausgebildet und die Neigung des Streuwerks wird über eine Verstellung der Deichselkonfiguration des Streugeräts angepasst. Beispielsweise ist die Deichsel des Streugeräts als verstellbare Knickdeichsel ausgebildet. Die Verstellung der Deichselkonfiguration kann die Verstellung einer durch die Deichsel vorgegebenen Anhänge-Neigung umfassen. Alternativ kann das landwirtschaftliche Streugerät auch als selbstfahrendes Streugerät ausgebildet sein.

In einer Weiterbildung des erfindungsgemäßen Verfahrens erfolgt das Erfassen des Füllstands des Vorratsbehälters sensorisch. Insbesondere erfolgt das Erfassen des Füllstands des Vorratsbehälters mittels einer sensorischen Gewichtserfassung. Die Füllstandserfassungseinrichtung des landwirtschaftlichen Streugeräts umfasst vorzugsweise einen Wiegerahmen und/oder einen oder mehrere Gewichtssensoren. Die Gewichtssensoren können Kraftaufnehmer oder Wägezellen mit einem oder mehreren Dehnungsmessstreifen umfassen. Die Gewichtssensoren können dazu eingerichtet sein, das Gewicht des Vorratsbehälters nach dem Prinzip der elektromagnetischen Kraftkompensation zu ermitteln. Die Gewichtssensoren können auch kapazitive oder piezoresistive Sensoren sein. Das Erfassen des Füllstands des Vorratsbehälters kann alternativ oder zusätzlich auch mittels einer Kamera erfolgen, welche Aufnahmen des Vorratsbehälters zur Verfügung stellt. Die Aufnahmen können zum Erfassen des Füllstands des Vorratsbehälters ausgewertet werden. Alternativ oder zusätzlich kann eine Differenzmessung der Neigung des Trägerfahrzeugs und des Streugeräts und/oder eine Winkelmessung zwischen dem Unterlenker und dem Streugerät erfolgen.

In einer anderen Ausführungsform des erfindungsgemäßen Verfahrens erfolgt das Erfassen des Füllstands des Vorratsbehälters über eine Füllstandsberechnung. Bei der Füllstandsberechnung wird vorzugsweise ein Anfangsfüllstand des Vorratsbehälters und die Abgabemenge an Streugut während des Streuvorgangs berücksichtigt. Das Berechnen des Füllstands des Vorratsbehälters erfolgt vorzugsweise über eine Datenverarbeitungseinrichtung des landwirtschaftlichen Streugeräts. Beispielsweise wird beim Berechnen des Füllstands ein Kalibrierfaktor berücksichtigt, aus welchem die Durchflussmenge des Streuguts durch ein Dosierorgan des landwirtschaftlichen Streugeräts während der Streugutausbringung ermittelbar ist. Über den Kalibrierfaktor sowie die Dauer des Ausbringvorgangs kann dann die bereits ausgebrachte Menge an Streugut berechnet werden, wodurch eine Füllstandsberechnung des Vorratsbehälters ermöglicht wird.

Erfindungsgemäß erfolgt das Anpassen der Neigung des Streuwerks des landwirtschaftlichen Streugeräts gemäß einer Kennlinie, welche einen Zusammenhang zwischen dem Füllstand des Vorratsbehälters und einer auszugleichenden Neigung des Streuwerks des landwirtschaftlichen Streugeräts definiert. Die Kennlinie kann einen Zusammenhang zwischen dem Füllstand des Vorratsbehälters und einer einzustellenden Länge, Neigung oder Position eines Oberlenkers und/oder eines oder mehrerer Unterlenker einer trägerfahrzeugseitigen Anbauvorrichtung definieren. Die Kennlinie kann einen linearen oder nichtlinearen Zusammenhang zwischen dem Füllstand des Vorratsbehälters und der auszugleichenden Neigung des Streuwerks definieren. Die Kennlinie berücksichtigt vorzugsweise Federwege am Fahrwerk des Trägerfahrzeugs und/oder Reifendeformationen, welche sich in Abhängigkeit des Füllstands des Vorratsbehälters verändern. Ferner kann die Kennlinie auch Eigenschaften des Bodens der landwirtschaftlichen Nutzfläche berücksichtigen, um beispielsweise das Einsinkverhalten bei unterschiedlichen Füllständen abbilden zu können. Alternativ oder zusätzlich kann die Kennlinie auch Eigenschaften der Reifen des Trägerfahrzeugs berücksichtigen, um beispielsweise das Deformationsverhalten der Reifen des Trägerfahrzeugs bei unterschiedlichen Füllständen abbilden zu können. Insbesondere kann die Kennlinie auch den Luftdruck der Reifen des Trägerfahrzeugs berücksichtigen.

Die Neigungen des landwirtschaftlichen Streugeräts und des Trägerfahrzeugs sind von dem Füllstand des Vorratsbehälters abhängig, da sich mit dem Füllstand des Vorratsbehälters auch das Gewicht des sich in dem Vorratsbehälter befindlichen Streuguts ändert. Somit sind die Neigungen des landwirtschaftlichen Streugeräts und des Trägerfahrzeugs insbesondere von der Masse des sich in dem Vorratsbehälter befindlichen Streuguts abhängig. Da sich die Schüttdichten unterschiedlicher Streugutsorten voneinander unterscheiden können, sind zur Umsetzung eines präzisen Neigungsausgleichs bei unterschiedlichen Streugutsorten voneinander abweichende Kennlinien zu berücksichtigen.

In einer weiteren bevorzugten Ausführungsform des erfindungsgemäßen Verfahrens wird die Kennlinie vor dem Streuvorgang im Rahmen einer Neigungskalibrierung ermittelt. Eine im Rahmen einer Neigungskalibrierung ermittelte Kennlinie bildet das füllstandsabhängige Neigungsverhalten des Streugeräts äußerst präzise ab. Alternativ oder zusätzlich kann die Kennlinie auch von einer externen Datenquelle auf das landwirtschaftliche Streugerät aufgespielt werden. Darüber hinaus kann die Kennlinie auch von dem landwirtschaftlichen Streugerät berechnet werden, beispielsweise unter Berücksichtigung der Konfiguration und/oder Ausstattung des landwirtschaftlichen Streugeräts und/oder unter Berücksichtigung der Konfiguration und/oder Ausstattung des Träger- oder Zugfahrzeugs.

Es ist außerdem ein erfindungsgemäßes Verfahren vorteilhaft, bei welchem die Neigungskalibrierung während des Befüllvorgangs des Vorratsbehälters mit Streugut erfolgt. Insbesondere erfolgt die Neigungskalibrierung während des Befüllvorgangs des Vorratsbehälters unter Berücksichtigung von während des Befüllvorgangs sensorisch erfassten Neigungsdaten des Trägerfahrzeugs und/oder des Streugeräts. Beispielsweise umfasst das Trägerfahrzeug und/oder das Streugerät einen oder mehrere Sensoren, über welche die Neigung, insbesondere die Neigungsveränderung, des Trägerfahrzeugs und/oder des Streugeräts während des Befüllvorgangs des Vorratsbehälters ermittelbar ist. Der eine oder die mehreren Sensoren erfassen vorzugsweise die Neigung des Streugeräts über mehrere, insbesondere zwei, Referenzmessungen während des Befüllvorgangs, beispielsweise in einem Leerzustand und in einem Vollzustand des Vorratsbehälters. Zur Ermittlung einer linearen Kennlinie sind in diesem Zusammenhang bereits zwei Referenzmessungen ausreichend. Bei einer nichtlinearen Kennlinie sind regelmäßig mehr als zwei Referenzmessungen erforderlich, um das Neigungsverhalten des Streugeräts präzise abbilden zu können.

Wenn das Trägerfahrzeug und/oder das Streugerät einen oder mehrere Sensoren umfassen, über welche die Neigung des Trägerfahrzeugs und/oder des Streugeräts ermittelbar ist, kann dieser oder können diese Sensoren auch zur Überwachung der Neigung des Streugeräts und/oder des Trägerfahrzeugs während der Streugutausbringung verwendet werden. Der eine oder die mehreren Sensoren, über welche die Neigung des Trägerfahrzeugs und/oder des Streugeräts ermittelbar ist, sind vorzugsweise Neigungssensoren. Beispielsweise kann eine Sensordatenfusion aus den Daten des einen oder der mehreren Neigungssensoren des Streugeräts und/oder des Trägerfahrzeugs und den Daten des einen oder der mehreren Gewichtssensoren des Streugeräts zum Überwachen und/oder Einstellen der Neigung des Streugeräts ausgeführt werden.

Die der Erfindung zugrundeliegende Aufgabe wird ferner durch ein landwirtschaftliches Streugerät der eingangs genannten Art gelöst, wobei das erfindungsgemäße landwirtschaftliche Streugerät eine Steuerungseinrichtung aufweist, welche dazu eingerichtet ist, eine Neigungsverstellung eines zumindest eine Streuscheibe, zumindest ein Dosierorgan für das Streugut, wobei jeder Streuscheibe ein Dosierorgan zugeordnet ist, und zumindest eine Einrichtung zur Verstellung des Aufgabepunkts des Streuguts auf die Streuscheibe umfassenden Streuwerks des landwirtschaftlichen Streugeräts in Abhängigkeit des durch die Füllstandserfassungseinrichtung erfassten Füllstands des Vorratsbehälters gemäß einer Kennlinie, welche einen Zusammenhang zwischen dem Füllstand des Vorratsbehälters und einer auszugleichenden Neigung des Streuwerks des landwirtschaftlichen Streugeräts definiert, zu veranlassen.

Das erfindungsgemäße landwirtschaftliche Streugerät ist vorzugsweise dazu eingerichtet, das Verfahren zum Einstellen der Neigung an einem landwirtschaftlichen Streugerät während der Streugutausbringung nach einer der vorstehend beschriebenen Ausführungsformen auszuführen. Hinsichtlich der Vorteile und Modifikationen eines solchen landwirtschaftlichen Streugeräts wird auf die Vorteile und Modifikationen des erfindungsgemäßen Verfahrens verwiesen.

Die der Erfindung zugrundeliegende Aufgabe wird ferner durch einen landwirtschaftlichen Maschinenverbund der eingangs genannten Art gelöst, wobei das Träger- und/oder Zugfahrzeug des erfindungsgemäßen landwirtschaftlichen Maschinenverbunds dazu eingerichtet ist, die Neigung eines zumindest eine Streuscheibe, zumindest ein Dosierorgan für das Streugut, wobei jeder Streuscheibe ein Dosierorgan zugeordnet ist, und zumindest eine Einrichtung zur Verstellung des Aufgabepunkts des Streuguts auf die Streuscheibe umfassenden Streuwerks des landwirtschaftlichen Streugeräts in Abhängigkeit des durch die Füllstandserfassungseinrichtung erfassten Füllstands des Vorratsbehälters gemäß einer Kennlinie, welche einen Zusammenhang zwischen dem Füllstand des Vorratsbehälters und einer auszugleichenden Neigung des Streuwerks des landwirtschaftlichen Streugeräts definiert, anzupassen.

In einer bevorzugten Ausführungsform des erfindungsgemäßen landwirtschaftlichen Maschinenverbunds ist dieser dazu eingerichtet, das Verfahren zum Einstellen der Neigung an einem landwirtschaftlichen Streugerät während der Streugutausbringung nach einer der vorstehend beschriebenen Ausführungsformen auszuführen. Hinsichtlich der Vorteile und Modifikationen eines solchen landwirtschaftlichen Maschinenverbunds wird auf die Vorteile und Modifikationen des erfindungsgemäßen Verfahrens verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel eines erfindungsgemäßen Maschinenverbunds in einem ersten Neigungszustand in einer Seitenansicht;
- Fig. 2: den in der Fig. 1 abgebildeten Maschinenverbund in einem zweiten Neigungszustand in einer Seitenansicht;
- Fig. 3: den in der Fig. 1 abgebildeten Maschinenverbund in einem dritten Neigungszustand in einer Seitenansicht; und
- Fig. 4: Kennlinien für die Einstellung der Neigung eines Streuwerks eines landwirtschaftlichen Streugeräts mittels des erfindungsgemäßen Verfahrens.

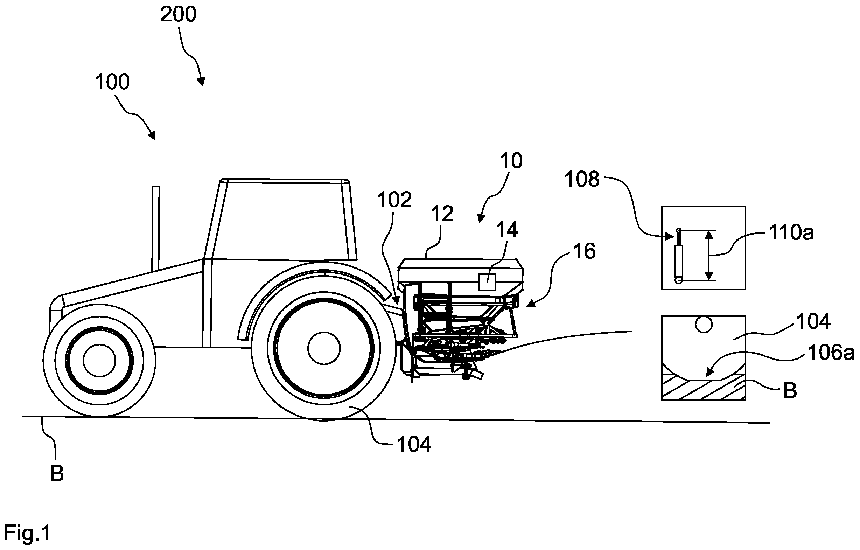

Die Fig. 1 bis 3 zeigen einen Maschinenverbund 200 in unterschiedlichen Neigungszuständen. Der Maschinenverbund 200 umfasst ein landwirtschaftliches Streugerät 10, welches als Zweischeiben-Zentrifugal-Düngerstreuer ausgebildet ist. Der landwirtschaftliche Maschinenverbund 200 umfasst ferner ein Trägerfahrzeug 100 für das landwirtschaftliche Streugerät 10. Bei dem Trägerfahrzeug 100 handelt es sich um einen Traktor. Das Trägerfahrzeug 100 weist eine als Dreipunkt-Kraftheber ausgebildete Anbauvorrichtung 102 auf, an welcher das Streugerät 10 befestigt ist. Die trägerfahrzeugseitige Anbauvorrichtung 102 umfasst einen Oberlenker und zwei unterhalb des Oberlenkers angeordnete Unterlenker, wobei über eine Verstellung des Oberlenkers und/oder der Unterlenker der Anbauvorrichtung 102 die Neigung N des landwirtschaftlichen Streugeräts 10 veränderbar ist. Somit kann die Neigung N des Streuwerks 16 des Streugeräts 10 über eine Verstellung der Anbauneigung des Streugeräts 10 eingestellt werden.

Das landwirtschaftliche Streugerät 10 weist einen Vorratsbehälter 12 und eine Füllstandserfassungseinrichtung 14 auf. Der Vorratsbehälter 12 dient zur Bevorratung von Streugut, also im vorliegenden Fall zur Bevorratung von Dünger. Die Füllstandserfassungseinrichtung 14 ist dazu eingerichtet, den Füllstand F des Vorratsbehälters 12 zu erfassen. Somit kann in Abhängigkeit des durch die Füllstandserfassungseinrichtung 14 erfassten Füllstands F des Vorratsbehälters 12 die Neigung N des Streuwerks 16 des Streugeräts 10 angepasst werden. Aufgrund der Fahrwerksfedern 108 des Fahrwerks des Trägerfahrzeugs 100, der Deformation der Reifen 104 des Trägerfahrzeugs 100 und der Einsinkung der Reifen 104 des Trägerfahrzeugs 100 in den Boden B ergeben sich bei verschiedenen Füllständen F des Vorratsbehälters 12 unterschiedliche Neigungen N, welche die Streugutausbringung beeinflussen.

Zur Vermeidung von Streufehlern aufgrund der Geräteneigung erlaubt der dargestellte landwirtschaftliche Maschinenverbund 200 die Anpassung der Neigung N des landwirtschaftlichen Streugeräts 10 in Abhängigkeit des Füllstands F des Vorratsbehälters 12. Die Neigungsverstellung in Abhängigkeit des Beladungs- bzw. Füllzustands des Vorratsbehälters 12 hat den Vorteil, dass keine direkte sensorische Neigungserfassung während des Streuvorgangs zu erfolgen hat. Somit kann eine Neigungsanpassung auch dann erfolgen, wenn die tatsächliche Neigung des Streugeräts 10 nicht oder nur unpräzise ermittelt werden kann.

Das Streuwerk 16 des Streugeräts 10 umfasst zwei nebeneinander angeordnete und rotierend antreibbare Streuscheiben und pro Streuscheibe jeweils ein Dosierorgan zum Dosieren der Aufgabemenge des auf die jeweilige Streuscheibe aufgegebenen Streuguts und eine Einrichtung zur Verstellung des Aufgabepunkts des auf die jeweilige Streuscheibe aufgegebenen Streuguts. In der dargestellten Ausführungsform wird die Neigung N des Streuwerks 16 über ein Verschwenken des gesamten Streugeräts 10 verändert. In anderen Ausführungsformen können auch Teile des Streugeräts 10, welche nicht Bestandteil des Streuwerks 16 sind, beim Verschwenken des Streuwerks 16 unverschwenkt bleiben.

Das Erfassen des Füllstands F des Vorratsbehälters 12 erfolgt sensorisch, nämlich mittels einer Gewichtserfassung des Vorratsbehälters 12. Die Füllstandserfassungseinrichtung 14 umfasst einen Wiegerahmen und mehrere Gewichtssensoren. Die Gewichtssensoren können beispielsweise Kraftaufnehmer mit einem oder mehreren Dehnungsmessstreifen sein. In anderen Ausführungsformen kann der Füllstand F des Vorratsbehälters 12 auch mittels einer Kamera erfolgen, welche Aufnahmen des Vorratsbehälters 12 zur Verfügung stellt. Die Aufnahmen können dann zum Erfassen des Füllstands F des Vorratsbehälters 12 ausgewertet werden. In einer weiteren Ausführungsform kann das Erfassen des Füllstands F des Vorratsbehälters 12 auch über eine Füllstandsberechnung erfolgen, wobei bei der Füllstandsberechnung ein Anfangsfüllstand des Vorratsbehälters 12 und die Abgabemenge an Streugut während des Streuvorgangs berücksichtigt wird.

Bei dem in der Fig. 1 dargestellten Zustand verläuft die Längsachse des Maschinenverbunds 200 parallel zum Boden B. Die Fahrwerksfedern 108 an der Hinterachse des Trägerfahrzeugs 100 weisen eine Federlänge 110a auf. Die Hinterreifen 104 des Trägerfahrzeugs sind geringfügig in den Boden B eingesunken und weisen eine moderate Reifendeformation 106a auf. In dem dargestellten Zustand ist eine Anpassung der Neigung N des Streuwerks 16 des Streugeräts 10 nicht erforderlich, da die Längsachse des Maschinenverbunds 200 parallel zum Boden B verläuft.

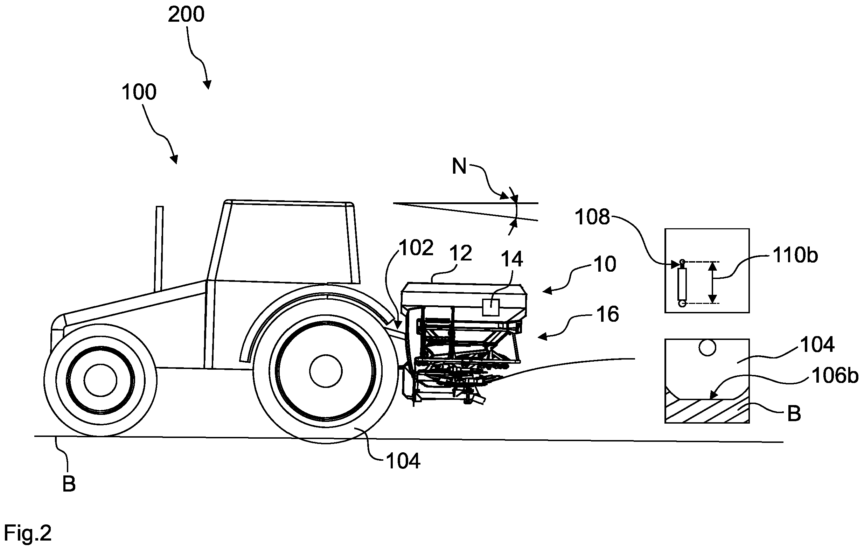

Bei dem in der Fig. 2 dargestellten Zustand weist der Vorratsbehälter 12 des Streugeräts 10 einen höheren Füllstand F auf, sodass das Streuwerk 16 des landwirtschaftlichen Streugeräts 10 nach unten geneigt ist. Die Neigung N ergibt sich aufgrund verkürzter Federlängen 110b der Fahrwerksfedern 108 des Trägerfahrzeugs 100, einer gesteigerten Einsinktiefe der Reifen 104 in den Boden B sowie einer stärkeren Reifendeformation 106b.

Damit die Streueinstellungen, beispielsweise die Scheibendrehzahl und der Aufgabepunkt des Streuguts auf die Streuscheiben, weiterhin zu dem beabsichtigten Streuergebnis führen, ist die Neigung N des Streuwerks 16 zu korrigieren, sodass die Längsachse des Maschinenverbunds 200 wieder parallel zum Boden B verläuft.

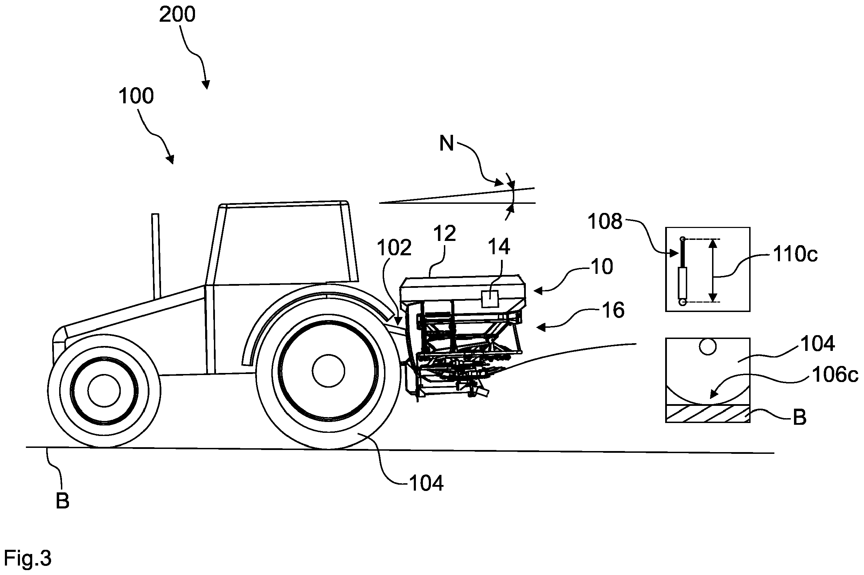

Bei dem in der Fig. 3 dargestellten Zustand weist der Vorratsbehälter 12 des Streugeräts 10 einen äußerst geringen Füllstand F auf. Aufgrund des geringen Füllstands F ist das Streugerät 10 nach oben geneigt. Die Neigung N ergibt sich aufgrund einer größeren Federlänge 110c der Fahrwerksfedern 108 des Trägerfahrzeugs 100, einer geringeren Einsinktiefe der Reifen 104 in den Boden B und einer geringeren, nunmehr lediglich minimalen Reifendeformation 106c der Reifen 104 des Trägerfahrzeugs 100.

Damit das beabsichtigte Streuergebnis erzielt wird, ist die Neigung N des Streuwerks 16 des Streugeräts 10 erneut derart anzupassen, dass die Längsachse des Streuwerks 16 parallel zum Boden B verläuft.

Das Anpassen der Neigung N des Streuwerks 16 des landwirtschaftlichen Streugeräts 10 erfolgt gemäß einer Kennlinie K1, K2, K3, welche einen Zusammenhang zwischen dem Füllstand F des Vorratsbehälters 12 und einer auszugleichenden Neigung N des Streuwerks 16 des Streugeräts 10 definiert.

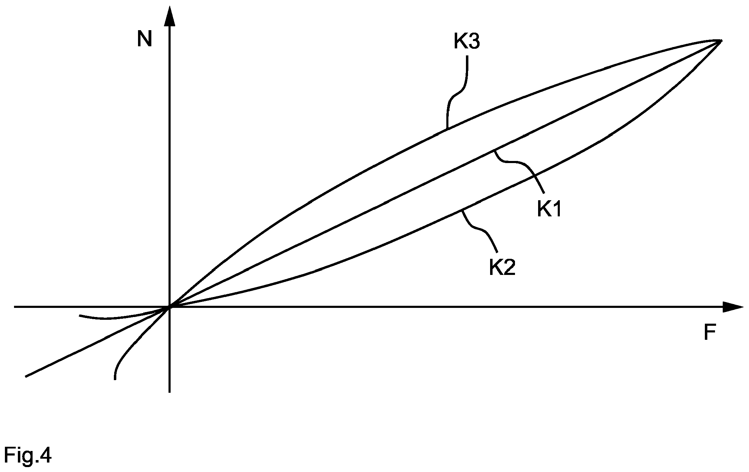

Die Fig. 4 zeigt beispielhaft drei unterschiedliche Kennlinien K1, K2, K3, welche zur Einstellung der Neigung N des Streuwerks 16 verwendet werden können.

Die Kennlinien K1, K2, K3 weisen jedem Füllstandswert einen Neigungswert zu. Auf Basis des Neigungswerts kann dann eine Neigungskorrektur an dem landwirtschaftlichen Streugerät 10 erfolgen. Die Neigungskorrektur kann beispielsweise über die Einstellung der Länge, der Neigung und/oder der Position des Oberlenkers und/oder der Unterlenker der trägerfahrzeugseitigen Anbauvorrichtung 102 erfolgen.

Die Kennlinie K1 definiert einen linearen Zusammenhang zwischen dem Füllstand F des Vorratsbehälters 12 und einer auszugleichenden Neigung N. Die Kennlinien K2, K3 definieren einen nichtlinearen Zusammenhang zwischen dem Füllstand F des Vorratsbehälters 12 und der auszugleichenden Neigung N. Der Füllstand F kann beispielsweise ein prozentualer Füllstand sein. Der Füllstand F kann jedoch auch in Absolutwerten angegeben werden, beispielsweise über eine Gewichts- oder Volumenangabe. Grundsätzlich ist es nicht ausgeschlossen, dass die Füllstandserfassungseinrichtung 14 des Streugeräts 10 auch einen negativen Füllstand F erfasst, beispielsweise, wenn Anbauteile von dem Vorratsbehälter 12 während der Streugutausbringung demontiert werden. Ein entsprechendes Anbauteil kann beispielsweise eine Behälterabdeckung des Vorratsbehälters 12 sein.

Die für die Neigungsanpassung verwendete Kennlinie K1, K2, K3 wird im Rahmen einer Neigungskalibrierung ermittelt und bildet das füllstandsabhängige Neigungsverhalten des Streugeräts 10 ab. Die Neigungskalibrierung erfolgt dabei während des Befüllvorgangs des Vorratsbehälters 12 mit Streugut und unter Berücksichtigung von Neigungsdaten des Trägerfahrzeugs 100 und/oder des Streugeräts 10, welche während des Befüllvorgangs sensorisch erfasst werden. Hierzu umfasst das Trägerfahrzeug 100 und/oder das Streugerät 10 einen oder mehrere Sensoren, über welche die Neigung N oder die Neigungsveränderung des Trägerfahrzeugs 100 oder des Streugeräts 10 während des Befüllvorgangs des Vorratsbehälters 12 ermittelbar ist. Die eine oder die mehreren Sensoren erfassen die Neigung N des Streugeräts beispielsweise über mehrere Referenzmessungen während des Befüllvorgangs. Eine Referenzmessung kann dabei beispielsweise in einem Leerzustand des Vorratsbehälters 12 erfolgen, wobei eine andere Referenzmessung beispielsweise in einem Vollzustand des Vorratsbehälters 12 erfolgen kann. Bei linearen Zusammenhängen zwischen dem Füllstand F des Vorratsbehälters 12 und der auszugleichenden Neigung N können im Rahmen der Neigungskalibrierung bereits zwei Referenzmessungen ausreichend sein, wobei bei nichtlinearen Zusammenhängen zwischen dem Füllstand F des Vorratsbehälters 12 und der auszugleichenden Neigung N im Rahmen der Neigungskalibrierung mehr als zwei Referenzmessungen vorzunehmen sind, damit das füllstandsabhängige Neigungsverhalten präzise abgebildet werden kann.

### Bezugszeichen

- 10: Streugerät
- 12: Vorratsbehälter
- 14: Füllstandserfassungseinrichtung
- 16: Streuwerk

- 100: Trägerfahrzeug
- 102: Anbauvorrichtung
- 104: Reifen
- 106a, 106b, 106c: Reifendeformationen
- 108: Fahrwerksfeder
- 110a, 110b, 110c: Federlängen

- 200: Maschinenverbund

- F: Füllstand
- N: Neigung
- K1, K2, K3: Kennlinien
- B: Boden

## Patentansprüche

1. Verfahren zum Einstellen der Neigung (N) an einem landwirtschaftlichen Streugerät (10) während der Streugutausbringung, mit den Schritten:
- Erfassen des Füllstands (F) eines Vorratsbehälters (12) für Streugut des landwirtschaftlichen Streugeräts (10) mittels einer Füllstandserfassungseinrichtung (14) des landwirtschaftlichen Streugeräts (10);
- Anpassen der Neigung (N) eines zumindest eine Streuscheibe, zumindest ein Dosierorgan für das Streugut, wobei jeder Streuscheibe ein Dosierorgan zugeordnet ist, und zumindest eine Einrichtung zur Verstellung des Aufgabepunkts des Streuguts auf die Streuscheibe umfassenden Streuwerks (16) des landwirtschaftlichen Streugeräts (10) in Abhängigkeit des durch die Füllstandserfassungseinrichtung (14) erfassten Füllstands (F) des Vorratsbehälters (12),
wobei das Anpassen der Neigung des Streuwerks (16) des landwirtschaftlichen Streugeräts (10) gemäß einer Kennlinie (K1, K2, K3) erfolgt, welche einen Zusammenhang zwischen dem Füllstand (F) des Vorratsbehälters (12) und einer auszugleichenden Neigung (N) des Streuwerks (16) des landwirtschaftlichen Streugeräts (10) definiert.

2. Verfahren nach Anspruch 1,
**dadurch gekennzeichnet, dass** beim Anpassen der Neigung (N) des Streuwerks (16) das landwirtschaftliche Streugerät (10) um eine horizontale Querachse verschwenkt wird.

3. Verfahren nach Anspruch 1 oder 2,
**dadurch gekennzeichnet, dass** das landwirtschaftliche Streugerät (10) als Anbau-Streugerät ausgebildet ist und die Neigung (N) des Streuwerks (16) über eine Verstellung der Anbauneigung des Streugeräts (10) verändert wird.

4. Verfahren nach Anspruch 3,
**dadurch gekennzeichnet, dass** die Verstellung der Anbauneigung des Streugeräts (10) durch eine Verstellung einer trägerfahrzeugseitigen Anbauvorrichtung (102) erfolgt.

5. Verfahren nach Anspruch 4,
**dadurch gekennzeichnet, dass** die trägerfahrzeugseitige Anbauvorrichtung (102) einen Oberlenker und/oder einen oder mehrere Unterlenker umfasst, wobei die Verstellung der trägerfahrzeugseitigen Anbauvorrichtung (102) über eine Längen-, Neigungs- und/oder Positionsveränderung des Oberlenkers und/oder des einen oder der mehreren Unterlenker erfolgt.

6. Verfahren nach Anspruch 1 oder 2,
**dadurch gekennzeichnet, dass** das landwirtschaftliche Streugerät (10) als Anhänge-Streugerät (10) ausgebildet ist und die Neigung des Streuwerks (16) über eine Verstellung der Deichselkonfiguration des Streugeräts (10) angepasst wird.

7. Verfahren nach einem der vorstehenden Ansprüche,
**dadurch gekennzeichnet, dass** das Erfassen des Füllstands (F) des Vorratsbehälters (12) sensorisch, insbesondere mittels einer Gewichtserfassung des Vorratsbehälters (12), erfolgt.

8. Verfahren nach einem der vorstehenden Ansprüche,
**dadurch gekennzeichnet, dass** das Erfassen des Füllstands (F) des Vorratsbehälters (12) über eine Füllstandsberechnung erfolgt, wobei bei der Füllstandsberechnung ein Anfangsfüllstand des Vorratsbehälters (12) und die Abgabemenge an Streugut während des Streuvorgangs berücksichtigt wird.

9. Verfahren nach einem der vorstehenden Ansprüche,
**dadurch gekennzeichnet, dass** die Kennlinie (K1, K2, K3) vor dem Streuvorgang im Rahmen einer Neigungskalibrierung ermittelt wird.

10. Verfahren nach Anspruch 9,
**dadurch gekennzeichnet, dass** die Neigungskalibrierung während des Befüllvorgangs des Vorratsbehälters (12) mit Streugut und vorzugsweise unter Berücksichtigung von während des Befüllvorgangs sensorisch erfassten Neigungsdaten des Trägerfahrzeugs (100) und/oder des Streugeräts (10) erfolgt.

11. Landwirtschaftliches Streugerät (10), mit
- einem Vorratsbehälter (12) für Streugut; und
- einer Füllstandserfassungseinrichtung (14), welche dazu eingerichtet ist, den Füllstand (F) des Vorratsbehälters (12) zu erfassen;
ferner umfassend eine Steuerungseinrichtung, welche dazu eingerichtet ist, eine Neigungsverstellung eines zumindest eine Streuscheibe, zumindest ein Dosierorgan für das Streugut, wobei jeder Streuscheibe ein Dosierorgan zugeordnet ist, und zumindest eine Einrichtung zur Verstellung des Aufgabepunkts des Streuguts auf die Streuscheibe umfassenden Streuwerks (16) des landwirtschaftlichen Streugeräts in Abhängigkeit des durch die Füllstandserfassungseinrichtung (14) erfassten Füllstands (F) des Vorratsbehälters (12) gemäß einer Kennlinie (K1, K2, K3), welche einen Zusammenhang zwischen dem Füllstand (F) des Vorratsbehälters (12) und einer auszugleichenden Neigung (N) des Streuwerks (16) des landwirtschaftlichen Streugeräts (10) definiert, zu veranlassen.

12. Landwirtschaftliches Streugerät (10) nach Anspruch 11,
**dadurch gekennzeichnet, dass** das landwirtschaftliche Streugerät (10) dazu eingerichtet ist, das Verfahren nach einem der Ansprüche 1 bis 10 auszuführen.

13. Landwirtschaftlicher Maschinenverbund (200), mit
- einem landwirtschaftlichen Streugerät (10), welches einen Vorratsbehälter (12) für Streugut und eine Füllstandserfassungseinrichtung (14) aufweist, wobei die Füllstandserfassungseinrichtung (14) dazu eingerichtet ist, den Füllstand (F) des Vorratsbehälters (12) zu erfassen; und
- einem Träger- und/oder Zugfahrzeug (100) für das landwirtschaftliche Streugerät (10),
wobei das Träger- und/oder Zugfahrzeug (100) dazu eingerichtet ist, die Neigung (N) eines zumindest eine Streuscheibe, zumindest ein Dosierorgan für das Streugut, wobei jeder Streuscheibe ein Dosierorgan zugeordnet ist, und zumindest eine Einrichtung zur Verstellung des Aufgabepunkts des Streuguts auf die Streuscheibe umfassenden Streuwerks (16) des landwirtschaftlichen Streugeräts in Abhängigkeit des durch die Füllstandserfassungseinrichtung (14) erfassten Füllstands (F) des Vorratsbehälters (12) gemäß einer Kennlinie (K1, K2, K3), welche einen Zusammenhang zwischen dem Füllstand (F) des Vorratsbehälters (12) und einer auszugleichenden Neigung (N) des Streuwerks (16) des landwirtschaftlichen Streugeräts (10) definiert, anzupassen.

14. Landwirtschaftlicher Maschinenverbund (200) nach Anspruch 13,
**dadurch gekennzeichnet, dass** der landwirtschaftliche Maschinenverbund (200) dazu eingerichtet ist, das Verfahren nach einem der Ansprüche 1 bis 10 auszuführen.

## Claims

1. Method for adjusting the inclination (N) on an agricultural spreader (10) during the spreading of granular material, comprising the steps of:
- detecting the fill level (F) of a reservoir (12) for granular material of the agricultural spreader (10) by means of a fill level detection device (14) of the agricultural spreader (10);
- adapting the inclination (N) of a spreading mechanism (16) of the agricultural spreader (10), said spreading mechanism comprising at least one spreading disk, at least one metering element for the granular material, each spreading disk being assigned a metering element, and at least one device for adjusting the feed point of the granular material onto the spreading disk, depending on the fill level (F) of the reservoir (12) detected by the fill level detection device (14),
wherein the inclination of the spreading mechanism (16) of the agricultural spreader (10) is adapted according to a characteristic (K1, K2, K3) which defines a relationship between the fill level (F) of the reservoir (12) and an inclination (N) to be balanced of the spreading mechanism (16) of the agricultural spreader (10).

2. Method according to claim 1,
**characterized in that,** when the inclination (N) of the spreading mechanism (16) is adapted, the agricultural spreader (10) is pivoted about a horizontal transverse axis.

3. Method according to claim 1 or 2,
**characterized in that** the agricultural spreader (10) is designed as an attachment spreader, and the inclination (N) of the spreading mechanism (16) is changed by adjusting the attachment inclination of the spreader (10).

4. Method according to claim 3,
**characterized in that** the attachment inclination of the spreader (10) is adjusted by adjusting an attachment device (102) on the carrier vehicle side.

5. Method according to claim 4,
**characterized in that** the attachment device (102) on the carrier vehicle side comprises an upper link and/or one or more lower links, the attachment device (102) on the carrier vehicle side being adjusted via a change in the length, inclination and/or position of the upper link and/or of the one or more lower links.

6. Method according to claim 1 or 2,
**characterized in that** the agricultural spreader (10) is designed as a trailer spreader (10), and the inclination of the spreading mechanism (16) is adapted via an adjustment of the drawbar configuration of the spreader (10).

7. Method according to any one of the preceding claims,
**characterized in that** the fill level (F) of the reservoir (12) is detected by sensors, in particular by means of a weight detection of the reservoir (12).

8. Method according to any one of the preceding claims,
**characterized in that** the fill level (F) of the reservoir (12) is detected via a fill level calculation, wherein an initial fill level of the reservoir (12) and the delivery quantity of granular material during the spreading process are taken into account during the fill level calculation.

9. Method according to any one of the preceding claims,
**characterized in that** the characteristic (K1, K2, K3) is determined in the course of an inclination calibration before the spreading process.

10. Method according to claim 9,
**characterized in that** the inclination calibration takes place during the process of filling the reservoir (12) with granular material and preferably taking into account inclination data of the carrier vehicle (100) and/or of the spreader (10) that are detected by sensors during the filling process.

11. Agricultural spreader (10), having
- a reservoir (12) for granular material; and
- a fill level detection device (14) which is designed to detect the fill level (F) of the reservoir (12);
further comprising a control device, which is designed to initiate an inclination adjustment of a spreading mechanism (16) of the agricultural spreader, said spreading mechanism comprising at least one spreading disk, at least one metering element for the granular material, each spreading disk being assigned a metering element, and at least one device for adjusting the feed point of the granular material onto the spreading disk, depending on the fill level (F) of the reservoir (12) detected by the fill level detection device (14), according to a characteristic (K1, K2, K3) which defines a relationship between the fill level (F) of the reservoir (12) and an inclination (N) to be balanced of the spreading mechanism (16) of the agricultural spreader (10).

12. Agricultural spreader (10) according to claim 11,
**characterized in that** the agricultural spreader (10) is designed to carry out the method according to any one of claims 1 to 10.

13. Agricultural machine combination (200), comprising
- an agricultural spreader (10) which has a reservoir (12) for granular material and a fill level detection device (14), wherein the fill level detection device (14) is designed to detect the fill level (F) of the reservoir (12); and
- a carrier and/or towing vehicle (100) for the agricultural spreader (10),
wherein the carrier and/or towing vehicle (100) is designed to adapt the inclination (N) of a spreading mechanism (16) of the agricultural spreader, said spreading mechanism comprising at least one spreading disk, at least one metering element for the granular material, each spreading disk being assigned a metering element, and at least one device for adjusting the feed point of the granular material onto the spreading disk, depending on the fill level (F) of the reservoir (12) detected by the fill level detection device (14), according to a characteristic (K1, K2, K3) which defines a relationship between the fill level (F) of the reservoir (12) and an inclination (N) to be balanced of the spreading mechanism (16) of the agricultural spreader (10).

14. Agricultural machine combination (200) according to claim 13,
**characterized in that** the agricultural machine combination (200) is designed to carry out the method according to any one of claims 1 to 10.

## Revendications

1. Procédé de réglage de l'inclinaison (N) au niveau d'un appareil d'épandage agricole (10) pendant l'application de matériau d'épandage, comprenant les étapes de :
- détection du niveau de remplissage (F) d'un réservoir de stockage (12) pour du matériau d'épandage de l'appareil d'épandage agricole (10) au moyen d'un dispositif de détection de niveau de remplissage (14) de l'appareil d'épandage agricole (10) ;
- ajustement de l'inclinaison (N) d'un mécanisme d'épandage (16) de l'appareil d'épandage agricole (10), comprenant au moins un disque d'épandage, au moins un organe de dosage pour le matériau d'épandage, un organe de dosage étant associé à chaque disque d'épandage, et au moins un dispositif de réglage du point de sortie du matériau d'épandage sur le disque d'épandage, en fonction du niveau de remplissage (F) du réservoir de stockage (12) détecté par le dispositif de détection de niveau de remplissage (14),
l'ajustement de l'inclinaison du mécanisme d'épandage (16) de l'appareil d'épandage agricole (10) étant effectué selon une courbe caractéristique (K1, K2, K3), laquelle définit une relation entre le niveau de remplissage (F) du réservoir de stockage (12) et une inclinaison (N) à compenser du mécanisme d'épandage (16) de l'appareil d'épandage agricole (10).

2. Procédé selon la revendication 1,
**caractérisé en ce que,** lors de l'ajustement de l'inclinaison (N) du mécanisme d'épandage (16), l'appareil d'épandage agricole (10) est tourné autour d'un axe transversal horizontal.

3. Procédé selon la revendication 1 ou 2,
**caractérisé en ce que** l'appareil d'épandage agricole (10) est conçu en tant qu'appareil d'épandage à monter et l'inclinaison (N) du mécanisme d'épandage (16) est modifiée par l'intermédiaire d'un réglage de l'inclinaison de montage de l'appareil d'épandage (10).

4. Procédé selon la revendication 3,
**caractérisé en ce que** le réglage de l'inclinaison de montage de l'appareil d'épandage (10) s'effectue par un réglage d'un dispositif de montage (102) côté véhicule porteur.

5. Procédé selon la revendication 4,
**caractérisé en ce que** le dispositif de montage (102) côté véhicule porteur comprend un bras oscillant supérieur et/ou un ou plusieurs bras oscillants inférieurs, le réglage du dispositif de montage (102) côté véhicule porteur s'effectuant par l'intermédiaire d'une modification de longueur, d'inclinaison et/ou de position du bras oscillant supérieur et/ou de l'un ou des plusieurs bras oscillants inférieurs.

6. Procédé selon la revendication 1 ou 2,
**caractérisé en ce que** l'appareil d'épandage agricole (10) est conçu en tant qu'appareil d'épandage d'attelage (10) et l'inclinaison du mécanisme d'épandage (16) est ajustée par l'intermédiaire d'un réglage de la configuration de timon de l'appareil d'épandage (10).

7. Procédé selon l'une quelconque des revendications précédentes,
**caractérisé en ce que** la détection du niveau de remplissage (F) du réservoir de stockage (12) s'effectue de manière sensorielle, en particulier au moyen d'une détection du poids du réservoir de stockage (12).

8. Procédé selon l'une quelconque des revendications précédentes,
**caractérisé en ce que** la détection du niveau de remplissage (F) du réservoir de stockage (12) s'effectue par l'intermédiaire d'un calcul de niveau de remplissage, un niveau de remplissage initial du réservoir de stockage (12) et la quantité de distribution de matériau d'épandage pendant le processus d'épandage étant pris en compte lors du calcul de niveau de remplissage.

9. Procédé selon l'une quelconque des revendications précédentes,
**caractérisé en ce que** la courbe caractéristique (K1, K2, K3) est déterminée avant le processus d'épandage dans le cadre d'un calibrage d'inclinaison.

10. Procédé selon la revendication 9,
**caractérisé en ce que** le calibrage d'inclinaison s'effectue pendant le processus de remplissage du réservoir de stockage (12) avec du matériau d'épandage et de préférence en tenant compte de données d'inclinaison du véhicule porteur (100) et/ou de l'appareil d'épandage (10) détectées de manière sensorielle pendant le processus de remplissage.

11. Appareil d'épandage agricole (10), comprenant
- un réservoir de stockage (12) pour du matériau d'épandage ; et
- un dispositif de détection de niveau de remplissage (14) configuré pour détecter le niveau de remplissage (F) du réservoir de stockage (12) ;
comprenant en outre un dispositif de commande configuré pour induire un réglage d'inclinaison d'un mécanisme d'épandage (16) de l'appareil d'épandage agricole, comprenant au moins un disque d'épandage, au moins un organe de dosage pour le matériau d'épandage, un organe de dosage étant associé à chaque disque d'épandage, et au moins un dispositif de réglage du point de sortie du matériau d'épandage sur le disque d'épandage, en fonction du niveau de remplissage (F) du réservoir de stockage (12) détecté par le dispositif de détection de niveau de remplissage (14) selon une courbe caractéristique (K1, K2, K3), laquelle définit une relation entre le niveau de remplissage (F) du réservoir de stockage (12) et une inclinaison (N) à compenser du mécanisme d'épandage (16) de l'appareil d'épandage agricole (10).

12. Appareil d'épandage agricole (10) selon la revendication 11,
**caractérisé en ce que** l'appareil d'épandage agricole (10) est configuré pour réaliser le procédé selon l'une quelconque des revendications 1 à 10.

13. Ensemble de machines agricoles (200), comprenant
- un appareil d'épandage agricole (10), lequel présente un réservoir de stockage (12) pour du matériau d'épandage et un dispositif de détection de niveau de remplissage (14), le dispositif de détection de niveau de remplissage (14) étant configuré pour détecter le niveau de remplissage (F) du réservoir de stockage (12) ; et
- un véhicule porteur et/ou tracteur (100) pour l'appareil d'épandage agricole (10),
le véhicule porteur et/ou tracteur (100) étant configuré pour adapter l'inclinaison (N) d'un mécanisme d'épandage (16) de l'appareil d'épandage agricole, comprenant au moins un disque d'épandage, au moins un organe de dosage pour le matériau d'épandage, un organe de dosage étant associé à chaque disque d'épandage, et au moins un dispositif de réglage du point de sortie du matériau d'épandage sur le disque d'épandage, en fonction du niveau de remplissage (F) du réservoir de stockage (12) détecté par le dispositif de détection de niveau de remplissage (14) selon une courbe caractéristique (K1, K2, K3), laquelle définit une relation entre le niveau de remplissage (F) du réservoir de stockage (12) et une inclinaison (N) à compenser du mécanisme d'épandage (16) de l'appareil d'épandage agricole (10).

14. Ensemble de machines agricoles (200) selon la revendication 13,
**caractérisé en ce que** l'ensemble de machines agricoles (200) est configuré pour réaliser le procédé selon l'une quelconque des revendications 1 à 10.
